# FASCICULE DE BREVET EUROPEEN

(11) **EP 4 392 655 B1**
(45) Date de publication et mention de la délivrance du brevet: **30.09.2026**
(21) Numéro de dépôt: 22773277.3
(22) Date de dépôt: 24.08.2022
(51) Int. Cl.: F02K 1/72

(54) **INVERSEUR A GRILLES MOBILES POUR ENSEMBLE PROPULSIF D'AERONEF, COMPRENANT UN SYSTEME POUR LIMITER LE FLAMBAGE D'UN ACTIONNEUR DE L'INVERSEUR**
UMKEHRER MIT BEWEGLICHEN KASKADEN FÜR EINE FLUGZEUGANTRIEBSANORDNUNG MIT EINEM SYSTEM ZUR BEGRENZUNG DER BIEGUNG EINES AKTUATORS DES UMKEHRERS
REVERSER WITH MOVABLE CASCADES FOR AN AIRCRAFT PROPULSION ASSEMBLY, COMPRISING A SYSTEM FOR LIMITING THE BUCKLING OF AN ACTUATOR OF THE REVERSER

(30) Priorité: 25.08.2021 FR 2108893
(43) Date de publication de la demande: 03.07.2024
(73) Titulaire: Safran Nacelles, 76700 Gonfreville-l'Orcher (FR)
(72) Inventeur: BOILEAU, Patrick André, 77550 MOISSY-CRAMAYEL (FR); JOURDAN, Fabien, 77550 MOISSY-CRAMAYEL (FR)
(74) Mandataire: Santarelli
(86) Numéro de dépôt international: PCT/FR2022/051607
(87) Numéro de publication internationale: WO 2023/026014

(56) Documents cités:
- EP-A1- 1 239 139
- WO-A1-2015/028755
- WO-A1-2021/044096
- FR-A1- 2 132 380
- US-B2- 10 605 197

## Description

### Domaine technique

L'invention se rapporte au domaine des nacelles et des inverseurs de poussée pour ensemble propulsif d'aéronef, et, plus particulièrement, aux nacelles équipées d'inverseurs à grilles mobiles.

### État de la technique antérieure

Les inverseurs de poussée sont des dispositifs permettant de dévier vers l'avant le flux d'air traversant l'ensemble propulsif, de manière à raccourcir les distances d'atterrissage, et à limiter la sollicitation des freins sur les atterrisseurs.

Les inverseurs à grilles actuellement exploités dans le secteur aéronautique comprennent un cadre avant formant avec les grilles une partie fixe de l'inverseur, destinée à être reliée à un carter de turbomachine.

Des développements techniques plus récents ont permis de mettre au point des inverseurs à grilles mobiles, tels que décrits par exemple dans les documents FR2981989A1, FR2999239A1, FR3002785A1 et FR3073572A1. Le document FR2132380A1 définit également un tel système.

Par rapport à un inverseur conventionnel à grilles fixes, la mobilité des grilles permet de réduire la longueur de la nacelle, et, par conséquent, de diminuer sa masse ainsi que la traînée qu'elle génère.

L'implantation de grilles d'inverseur mobiles nécessite d'adapter la conception de nombreuses parties de l'inverseur par rapport aux solutions à grilles fixes. Parmi les adaptations requises, il existe un besoin de limiter le flambage des actionneurs, pour éviter qu'ils ne se déforment trop, au risque de provoquer leur blocage et/ou leur défaillance. Le flambage des actionneurs peut être rencontré en conditions de fatigue, et en cas de panne entraînant un effort de compression important sur l'actionneur concerné par la panne.

### Exposé de l'invention

L'invention a tout d'abord pour objet un inverseur de poussée pour ensemble propulsif d'aéronef, l'inverseur présentant un axe central longitudinal et comprenant une structure fixe et un système mobile, le système mobile comprenant au moins un capot d'inverseur et au moins un ensemble de grilles de déviation comprenant une pluralité de grilles de déviation, l'inverseur comportant également un actionneur équipé d'une partie fixe et d'une partie mobile par rapport à la partie fixe, de manière à pouvoir déplacer le système mobile en translation par rapport à la structure fixe de l'inverseur selon l'axe central longitudinal, entre une position avancée de poussée directe et une position reculée d'inversion de poussée.

Selon l'invention, le système mobile comporte également une structure inter-grilles de limitation de flambage de l'actionneur, la structure inter-grilles étant interposée entre deux grilles de déviation directement consécutives et formant un canal traversé par l'actionneur, le canal étant délimité par une surface intérieure cylindrique s'étendant circonférentiellement le long d'au moins une partie d'une première courbe directrice fermée de la surface intérieure cylindrique. A cet égard, la surface intérieure cylindrique s'étend alors de préférence circonférentiellement tout le long de la première courbe directrice fermée, ou bien est interrompue circonférentiellement en s'étendant le long d'une partie seulement de la première courbe directrice fermée.

De plus, la partie fixe de l'actionneur traverse le canal et comprend une extrémité de sortie de la partie mobile, cette extrémité de sortie étant équipée d'une bague extérieure de limitation de flambage de l'actionneur, la bague présentant une surface extérieure cylindrique s'étendant circonférentiellement le long d'au moins une partie d'une seconde courbe directrice fermée de la surface extérieure cylindrique. A cet égard, la surface extérieure cylindrique s'étend alors de préférence circonférentiellement tout le long de la seconde courbe directrice fermée, ou bien est interrompue circonférentiellement en s'étendant le long d'une partie seulement de la seconde courbe directrice fermée.

Enfin, de préférence, dans une configuration non-contrainte en flambage de l'actionneur, les première et seconde courbes directrices fermées sont, en vue selon l'axe central longitudinal, de mêmes formes et concentriques en étant espacées l'une de l'autre d'un même écartement tout le long de celles-ci. Alternativement, les deux formes pourraient être différentes et/ou l'écartement pourrait être non-constant, par exemple en prévoyant que les première et seconde courbes directrices ne soient pas concentriques, sans sortir du cadre de l'invention.

L'invention permet ainsi de mettre à profit une structure inter-grilles pour limiter le flambage de l'actionneur, à l'aide d'une bague équipant cet actionneur et servant de butée potentielle dans un canal défini par cette même structure inter-grilles. En d'autres termes, durant le déplacement du système mobile de l'inverseur, l'amplitude d'un éventuel flambage de l'actionneur demeure maîtrisée en ne pouvant aller au-delà de la valeur de l'écartement initial entre les première et seconde courbes directrices fermées. En effet, une fois cet écartement consommé, la bague entre au contact de la surface intérieure cylindrique du canal de la structure inter-grilles, limitant ainsi le flambage de l'actionneur selon une amplitude maîtrisée.

Grâce à cette solution compacte, fiable et peu coûteuse, dans laquelle la partie mobile de l'actionneur se trouve en saillie axialement vers l'aval par rapport à l'extrémité de sortie prévue sur la partie fixe de ce même actionneur, les risques d'accélération de la fatigue ainsi que les risques d'éventuelles défaillances des actionneurs, en rapport avec le phénomène de flambage, sont avantageusement réduits.

L'invention prévoit de préférence au moins l'une des caractéristiques techniques optionnelles suivantes, prises isolément ou en combinaison.

De préférence, ledit au moins un ensemble de grilles comprend également une structure arrière de support des grilles sur laquelle est fixée une extrémité arrière de la pluralité de grilles de déviation, ainsi qu'une structure avant de support des grilles sur laquelle est fixée une extrémité avant de la pluralité de grilles de déviation, et la structure inter-grilles de limitation de flambage comporte une extrémité avant et une extrémité arrière respectivement fixées sur la structure avant de support et sur la structure arrière de support.

De préférence, les première et seconde courbes directrices fermées présentent une forme circulaire. Néanmoins, d'autres formes sont envisageables, comme par exemple des formes davantage ovalisées. Ces formes sont généralement retenues de manière à être identiques ou sensiblement identiques à la forme générale de la partie fixe de l'actionneur, pourvu de ses éventuels équipements extérieurs.

De préférence, la surface intérieure cylindrique du canal s'étend circonférentiellement tout le long de la première courbe directrice fermée, la structure inter-grilles de limitation de flambage étant préférentiellement réalisée d'une seule pièce.

Selon une autre possibilité, la surface intérieure cylindrique du canal est interrompue circonférentiellement en s'étendant le long d'une partie seulement de la première courbe directrice fermée, de manière à définir plusieurs secteurs angulaires de surface intérieure cylindrique, de préférence deux secteurs angulaires espacés l'un de l'autre, la structure inter-grilles de limitation de flambage étant préférentiellement réalisée à l'aide de deux poutres axiales définissant respectivement les deux secteurs angulaires. Dans cette réalisation multi-secteurs, chacun de ces secteurs s'étend par exemple sur une amplitude supérieure à 100°.

De préférence, la structure inter-grilles de limitation de flambage est davantage fonctionnalisée de manière à comporter une surface extérieure formant une piste axiale de glissement pour le système mobile. Cela permet de réduire les efforts de friction, et de faciliter le déplacement du système mobile de l'inverseur entre ses deux positions.

De préférence, la bague extérieure de limitation de flambage est réalisée d'une seule pièce, fendue, ou sectorisée. Lorsqu'elle est fendue ou sectorisée, sa mise en place et son remplacement sur la partie fixe de l'actionneur s'en trouvent facilités.

De préférence, la bague extérieure de limitation de flambage est réalisée dans un matériau antifriction.

Selon l'invention, l'actionneur est un vérin hydraulique ou électrique.

L'invention a également pour objet un ensemble propulsif pour aéronef, comprenant une turbomachine et une nacelle équipée d'un inverseur de poussée tel que décrit ci-dessus. D'autres avantages et caractéristiques de l'invention apparaîtront dans la description détaillée non limitative ci-dessous.

### Brève description des dessins

La description détaillée qui suit fait référence aux dessins annexés sur lesquels :
[Fig. 1] est une demi-vue schématique en coupe longitudinale d'un ensemble propulsif, comprenant un inverseur de poussée représenté en configuration de poussée directe ;
[Fig. 2] est une demi-vue schématique en coupe longitudinale de l'ensemble propulsif montré sur la figure 1, avec l'inverseur représenté en configuration d'inversion de poussée ;
[Fig. 3] est une vue éclatée en perspective d'une partie de la nacelle de l'ensemble propulsif montré sur les figures précédentes, montrant en particulier les éléments de l'inverseur de poussée ;
[Fig. 4] est une vue axiale des structures arrière de support des grilles montrées sur la figure précédente ;
[Fig. 5] est une vue partielle en perspective, plus détaillée, d'une partie de l'inverseur montré sur les figures précédentes ;
[Fig. 6] est une demi-vue schématique en coupe longitudinale d'une partie arrière de l'ensemble propulsif montré sur la figure 1, plus détaillée, et toujours avec l'inverseur en configuration de poussée directe ;
[Fig. 7] est une demi-vue schématique en coupe longitudinale d'une partie arrière de l'ensemble propulsif montré sur la figure 2, plus détaillée, et toujours avec l'inverseur en configuration d'inversion de poussée ;
[Fig. 8] est une vue en coupe transversale prise le long de la ligne VIII-VIII de la figure 6 ;
[Fig. 9] est une vue en coupe transversale similaire à celle de la figure 8, selon un autre mode de réalisation préféré de l'invention ; et
[Fig. 10] est une vue en coupe transversale similaire à celle de la figure 8, selon encore un autre mode de réalisation préféré de l'invention.

### Description détaillée de modes de réalisation

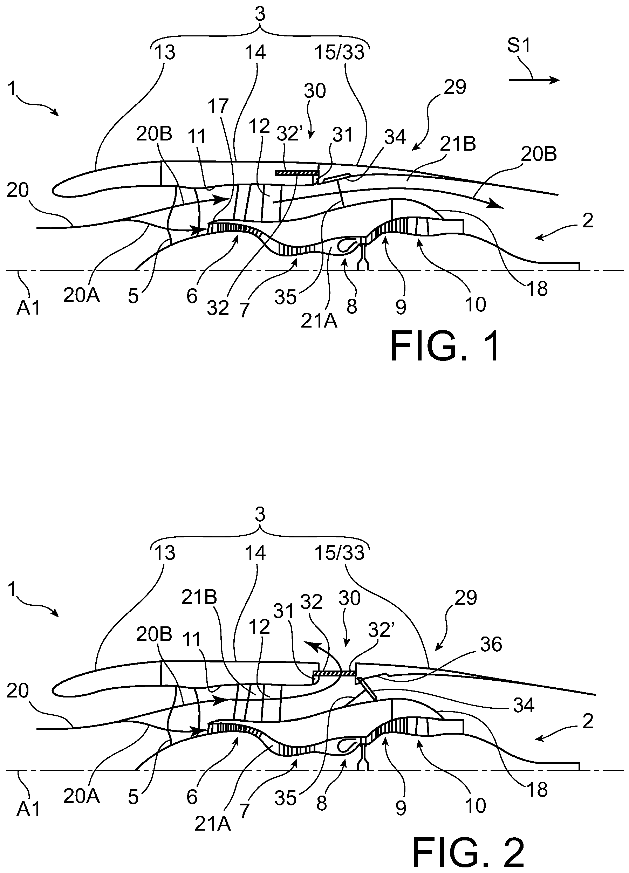

Il est représenté sur les figures 1 et 2 un ensemble propulsif 1 d'aéronef, présentant un axe central longitudinal A1.

Par la suite, les termes « avant » et « arrière » sont définis relativement à un sens général S1 d'écoulement des gaz à travers l'ensemble propulsif 1, le long de l'axe A1 lorsque celui-ci génère une poussée. Ces termes « avant » et « arrière » pourraient respectivement être substitués par les termes « amont » et « aval », avec la même signification.

L'ensemble propulsif 1 comprend une turbomachine 2, une nacelle 3 ainsi qu'un mât (non représenté), destiné à relier l'ensemble propulsif 1 à une aile (non représentée) de l'aéronef.

La turbomachine 2 est dans cet exemple un turboréacteur à double flux et à double corps comprenant, de l'avant vers l'arrière, une soufflante 5, un compresseur basse pression 6, un compresseur haute pression 7, une chambre de combustion 8, une turbine haute pression 9 et une turbine basse pression 10. Les compresseurs 6 et 7, la chambre de combustion 8 et les turbines 9 et 10 forment un générateur de gaz. Le turboréacteur 2 est doté d'un carter de soufflante 11 relié au générateur de gaz par des bras structuraux 12.

La nacelle 3 comprend une section avant formant une entrée d'air 13, une section médiane qui comporte deux capots de soufflante 14 enveloppant le carter de soufflante 11, et une section arrière 15.

En fonctionnement, un écoulement d'air 20 pénètre dans l'ensemble propulsif 1 par l'entrée d'air 13, traverse la soufflante 5 puis se divise en un flux primaire 20A et un flux secondaire 20B. Le flux primaire 20A s'écoule dans une veine primaire 21A de circulation de gaz traversant le générateur de gaz. Le flux secondaire 20B s'écoule dans une veine secondaire 21B entourant le générateur de gaz. La veine secondaire 21B est délimitée radialement vers l'intérieur par un carénage interne fixe qui enveloppe le générateur de gaz. Dans cet exemple, le carénage interne fixe comprend un premier tronçon 17 appartenant à la section médiane 14, et un deuxième tronçon 18 s'étendant vers l'arrière à partir du premier tronçon 17, de manière à former une partie de la section arrière 15.

Radialement vers l'extérieur, la veine secondaire 21B est délimitée par le carter de soufflante 11, et, dans la configuration de la figure 1, par des capots mobiles d'inverseur formant la section arrière 15 de la nacelle 3, qui seront décrits ultérieurement.

La nacelle 3 comporte un inverseur de poussée 30 comprenant d'une part une structure fixe 31 solidaire du carter de soufflante 11, et d'autre part un système 29 mobile par rapport à la structure fixe 31. Le système mobile 29 de l'inverseur 30 comprend au moins un ensemble 32' de grilles de déviation 32, les capots mobiles d'inverseur 33 précités, des volets d'obturation 34 et des biellettes 35. L'inverseur de poussée 30 est également centré sur l'axe A1, tout comme la turbomachine 2.

La figure 1 montre l'inverseur 30 dans une configuration de poussée directe. Dans cette configuration, les capots mobiles 33 et l'ensemble 32' du système mobile 29 sont dans une position de fermeture, ou position avancée, dans laquelle les capots d'inverseur 33 sont en appui sur la structure fixe 31. Dans cette même position du système mobile 29, les grilles 32 sont logées dans un espace délimité radialement par le carter de soufflante 11 d'une part, et par les capots de soufflante 14 d'autre part. En configuration de poussée directe, les volets d'obturation 34 sont rétractés au sein d'une cavité 36 (voir figure 2) formée par les capots mobiles 33. L'inverseur 30 permet ainsi de canaliser le flux secondaire 20B vers l'arrière de l'ensemble propulsif 1, de manière à générer une poussée. Ainsi, sur la figure 1, les grilles 32 et les capots mobiles 33, qui sont solidaires axialement les uns des autres, sont dans une position avancée dite de poussée directe.

La figure 2 montre le même inverseur 30 dans une configuration d'inversion de poussée. Dans cette configuration, les capots d'inverseur mobiles 33 et l'ensemble du système mobile 29 sont dans une position d'ouverture, ou position reculée, dans laquelle les capots 33 sont longitudinalement éloignés de la structure fixe 31 de manière à définir une ouverture radiale de la veine secondaire 21B. Les grilles 32 s'étendent à travers cette ouverture radiale. Dans cette configuration d'inversion de poussée, les volets d'obturation 34 sont déployés radialement dans la veine secondaire 21B de manière à diriger le flux secondaire 20B vers les grilles 32, lesquelles permettent d'orienter le flux ainsi redirigé vers l'avant de l'ensemble propulsif 1, dans le but de générer une contre-poussée. Ainsi, sur la figure 2, les grilles 32 et les capots mobiles 33 du système mobile 29 sont représentés dans une position reculée dite d'inversion de poussée.

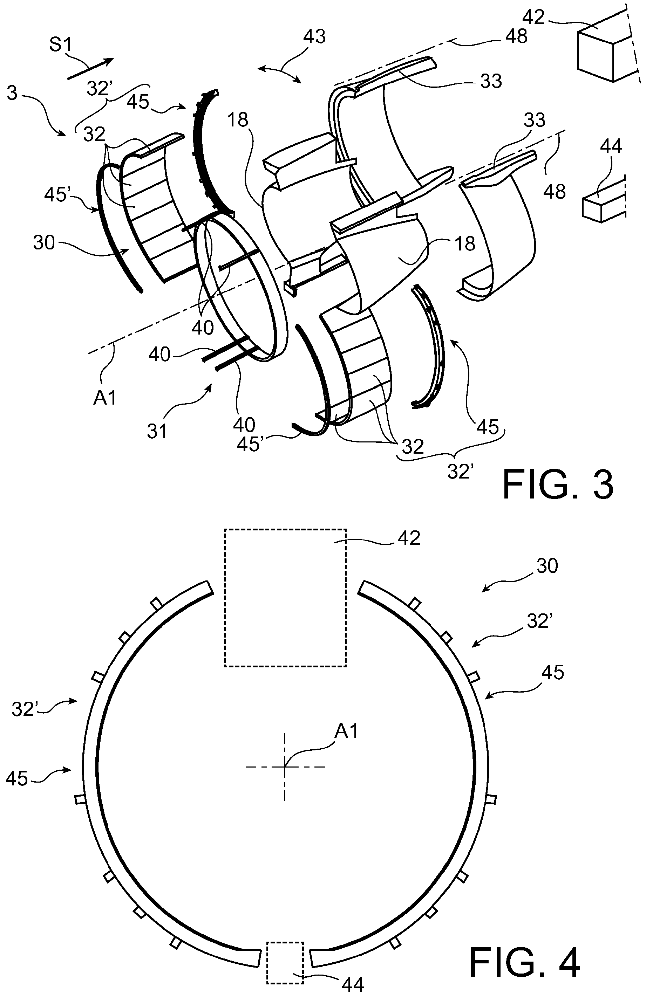

La figure 3 représente une vue éclatée en perspective de certains éléments de la nacelle 3, parmi lesquels une partie de la structure fixe 31 de l'inverseur 30, qui présente une forme générale annulaire centrée sur l'axe A1. Plus précisément, dans ce mode de réalisation préféré de l'invention, la structure fixe 31 dispose d'une forme de courbe fermée définissant une forme générale d'anneau, suivant localement le contour extérieur de la veine secondaire 21b selon la direction circonférentielle de la nacelle 43, en rapport à l'axe A1. La structure fixe 31 est également dénommée « cadre fixe » de l'inverseur.

La structure fixe 31 est équipée d'éléments de guidage des grilles 32 lors de leur déplacement entre les positions avancée et reculée, ces éléments comprenant des rails axiaux 40. Par exemple, ce sont deux rails 40 solidaires d'une partie supérieure de l'anneau, et deux autres rails 40 solidaires d'une partie inférieure de ce même anneau. Ici, les rails 40 sont fixés à la structure fixe 31 par leur extrémité arrière, tandis que leur extrémité avant est fixée à un autre carter (non représenté sur la figure 3). Les rails 40 assurent ainsi une fonction de guidage des grilles 32 lors du déplacement axial de celles-ci, mais également, en configuration d'inversion de poussée, une fonction de reprise d'efforts aérodynamiques, principalement radiaux et tangentiels.

La figure 3 représente schématiquement les grilles 32, qui se succèdent selon la direction circonférentielle 43. Ici, elles sont regroupées en deux ensembles latéraux comprenant chacun plusieurs grilles 32, ces ensembles étant dénommés ensembles de grilles de déviation 32'.

Ainsi, chaque ensemble de grilles 32' comporte plusieurs grilles de déviation 32, et s'étend sur un secteur angulaire proche de 180°. Les deux ensembles 32' sont préférentiellement écartés latéralement l'un de l'autre au niveau de leurs extrémités en regard deux à deux, pour ménager des espaces supérieur et inférieur respectivement dédiés au passage du mât 42 et d'une poutre longitudinale inférieure 44. Chaque ensemble de grilles 32' comporte également une structure arrière 45 de support de grilles, sur laquelle est fixée une extrémité arrière de chacune des grilles de déviation 32 de l'ensemble 32'. Ces structures arrière 45 sont également dénommées « cadres arrière de grilles », et elles s'étendent chacune circonférentiellement tout le long de leur ensemble latéral 32' associé, selon un secteur angulaire identique ou similaire comme cela est visible sur la figure 4. L'extrémité arrière de chaque grille 32 est donc destinée à être fixée sur sa structure arrière associée 45, par des moyens de fixation conventionnels. De manière analogue, chaque ensemble de grilles 32' comporte également une structure avant 45' de support de grilles, sur laquelle est fixée une extrémité avant de chacune des grilles de déviation 32 de l'ensemble 32'. Ces structures avant 45' sont également dénommées « cadres avant de grilles », et elles s'étendent chacune circonférentiellement tout le long de leur ensemble latéral 32' associé, selon un secteur angulaire identique ou similaire. L'extrémité avant de chaque grille 32 est donc destinée à être fixée sur sa structure avant associée 45', par des moyens de fixation conventionnels.

La configuration décrite ci-dessus est particulièrement bien adaptée dans le cas d'une conception de nacelle dans laquelle les capots 18 du deuxième tronçon sont montés articulés, l'inverseur 30 présentant alors une architecture dite « en D », connue sous l'appellation anglo-saxonne « D-Duct ». Néanmoins, l'étendue circonférentielle des ensembles de grilles 32' peut être aisément adaptée en fonction de la conception de l'inverseur et de la nacelle, pouvant par exemple adopter une architecture dite « en C », connue sous l'appellation anglo-saxonne « C-Duct », ou encore une architecture dite « en O », connue sous l'appellation anglo-saxonne « O-Duct ».

De manière connue, la structure fixe 31 comporte des organes (non représentés) formant des butées radiales et/ou tangentielles et/ou axiales pour les grilles 32 des ensembles 32'.

Sur la figure 3, les éléments de la nacelle 3 sont complétés par les capots articulés 18, 33, permettant de conférer l'architecture « en D » à la nacelle. En particulier, il a été représenté l'axe de pivot 48 associé à chaque capot d'inverseur 33, cet axe de pivot 48 étant parallèle ou sensiblement parallèle à l'axe A1, et permettant au capot 33 d'être mobile en rotation entre une position ouverte de maintenance et une position fermée de vol, représentée sur la figure 3.

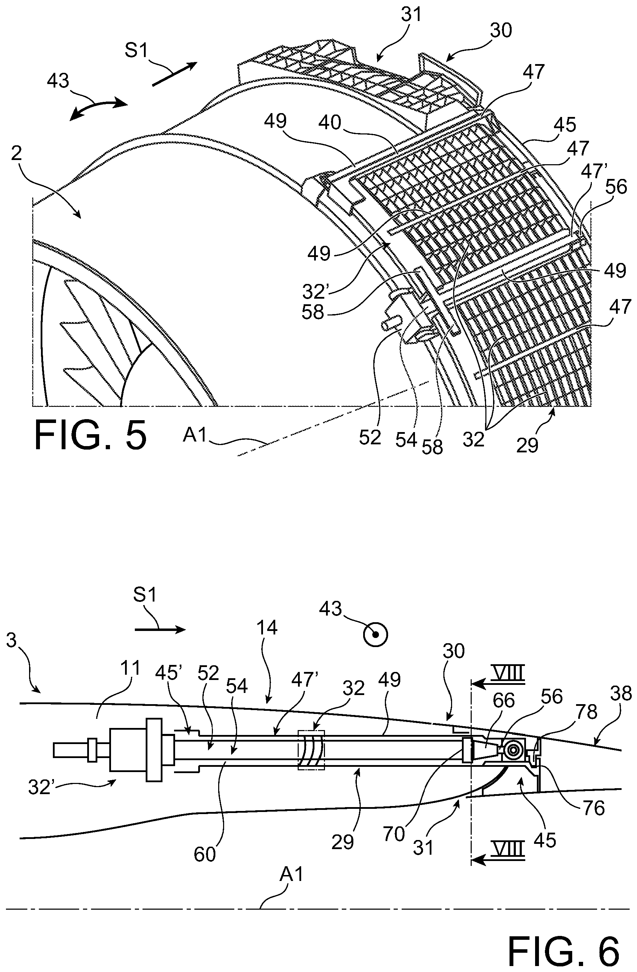

La figure 5 représente de manière plus détaillée une partie de l'un des deux ensembles de grilles 32'. De préférence, les deux ensembles 32' présentent une conception identique ou similaire, en étant symétriques par rapport à un plan vertical et longitudinal passant par l'axe A1. Par conséquent, par la suite, la description qui sera faite s'appliquera indifféremment à chacun de ces deux ensembles 32'.

L'ensemble de grilles 32' comprend des structures axiales inter-grilles 47, 47' agencées entre les grilles 32, selon la direction circonférentielle 43 de la nacelle et de son inverseur 30. Ces structures axiales inter-grilles 47, 47' s'étendent sur toute la longueur ou sensiblement toute la longueur axiale de l'ensemble 32', et se trouvent donc agencés entre les grilles 32, dans la direction 43. Avec leur surface radialement extérieure 49, ces structures axiales 47, 47' forment des pistes axiales de glissement pour le système mobile 29. De plus, il peut s'agir de plusieurs sortes de structures, parmi lesquels des éléments 47 assurant la fonction de jonction mécanique entre les grilles 32, et des structures inter-grilles de limitation de flambage 47', spécifiques à la présente invention. Une seule structure inter-grilles de limitation de flambage 47' est visible sur la figure 5, mais il peut en être prévu plusieurs au sein de chaque ensemble de grilles 32', de préférence autant que d'actionneurs 52 associés à chaque ensemble 32'. En effet, chaque structure 47' présente une forme creuse définissant intérieurement un canal traversé par un actionneur 52, ici un vérin hydraulique, mais qui pourrait alternativement être réalisé par un vérin électrique. Par la suite, seule la coopération entre l'une des structures inter-grilles 47' et son vérin associé 52 sera décrite ci-dessous, mais il doit être compris qu'une telle coopération s'applique pour tous les autres vérins et structures inter-grilles 47' de chaque ensemble de grilles 32'.

Le vérin 52 est formé d'une partie fixe 54 comprenant le cylindre de vérin, et dont une extrémité avant est par exemple fixée sur le carter de soufflante 11. Le vérin 52 est aussi formé d'une partie mobile 56 réalisée par la tige de vérin, et dont une extrémité arrière est fixée de manière articulée sur la structure arrière de support 45.

La structure inter-grilles de limitation de flambage 47' comporte une extrémité avant fixée de manière conventionnelle sur la structure avant de support 45', cette extrémité avant pouvant comporter des armatures circonférentielles 58 pour renforcer la fixation mécanique sur cette structure 45'. En outre, la structure inter-grilles de limitation de flambage 47' comporte une extrémité arrière fixée sur la structure arrière de support 45, toujours à l'aide de moyens conventionnels. Egalement, bien que cela n'ait pas été représenté, la structure inter-grilles de limitation de flambage 47' peut présenter le long de celle-ci des moyens permettant sa fixation sur les deux grilles 32 disposées de part et d'autre selon la direction circonférentielle 43.

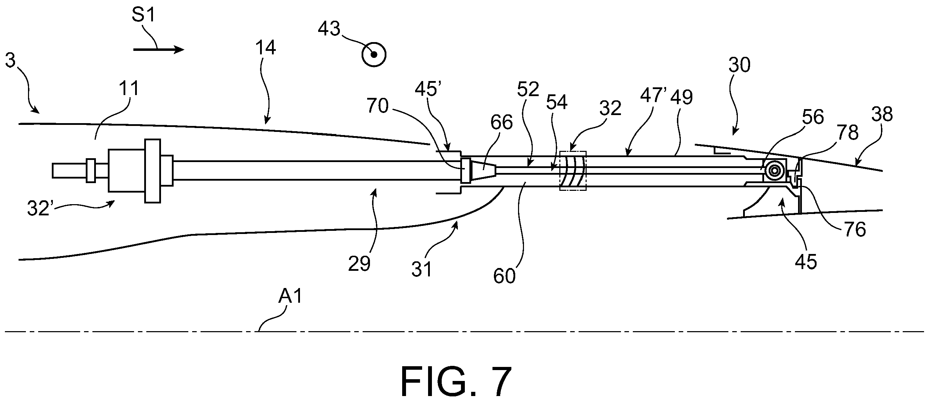

La partie fixe 54 du vérin 52 débouche vers l'avant de l'extrémité avant de la structure inter-grilles de limitation de flambage 47', tandis que la partie mobile 56 du vérin 52 débouche vers l'arrière de l'extrémité arrière de la structure inter-grilles 47', comme cela est également visible sur les figures 6 et 7 qui vont être décrites ci-dessous.

La figure 6 représente le système mobile 29 de l'inverseur 30 en position avancée de poussée directe, dans laquelle la tige de vérin 56 est entièrement rentrée dans le cylindre de vérin 54, et les grilles de déviation 32, inopérantes, recouvertes par les capots de soufflante 14. La figure 7 représente le système mobile 29 en position reculée d'inversion de poussée, dans laquelle la tige de vérin 56 est entièrement sortie vers l'arrière, et les grilles de déviation 32 reculées vers l'arrière pour pouvoir générer la fonction d'inversion de poussée.

Sur les figures 6 à 8, il est montré la structure inter-grilles de limitation de flambage 47' avec son canal intérieur 60 orienté parallèlement à l'axe A1, et traversé par le vérin 52 également orienté parallèlement à l'axe A1. Le canal 60 est délimité par une surface intérieure cylindrique 62 s'étendant circonférentiellement tout le long d'une première courbe directrice fermée 64, ici de forme circulaire et centrée sur un axe A2 correspondant à l'axe du vérin 52 en configuration non-sollicitée mécaniquement. L'axe A2 est parallèle à l'axe A1, ou sensiblement parallèle à celui-ci. En d'autres termes, dans ce mode de réalisation préféré, la surface intérieure cylindrique 62 de la structure inter-grilles 47' demeure ininterrompue tout le long d'une direction circonférentielle 43' de cette structure 47', en rapport à l'axe A2. La surface intérieure cylindrique 62 suit donc de manière continue la première courbe directrice fermée 64 en forme de cercle, en étant définie par une génératrice parallèle à l'axe A2 qui suit cette même courbe 64.

Ici, le canal 60 défini par la surface 62 s'étend de manière cylindrique préférentiellement tout le long de la structure inter-grilles 47'. La partie fixe 54 du vérin qui traverse le canal 60 comprend une extrémité 66 de sortie de la partie mobile 56, correspondant à son extrémité arrière. Dans la position avancée de poussée directe de la figure 6, cette extrémité de sortie 66 se trouve logée dans le canal 60, à proximité d'une extrémité arrière de la structure inter-grilles 47' mobile.

Selon une particularité de l'invention, l'extrémité de sortie 66 de la partie fixe du vérin 52 est équipée d'une bague extérieure 70 de limitation de flambage du vérin. La bague 70, agencée autour du cylindre de vérin, présente une surface extérieure cylindrique 62' s'étendant circonférentiellement tout le long d'une seconde courbe directrice fermée 64', ici de forme circulaire et également centrée sur l'axe A2. En d'autres termes, dans ce mode de réalisation préféré, la surface extérieure cylindrique 62' de la structure inter-grilles 47' demeure ininterrompue selon la direction circonférentielle 43' de cette structure 47', en rapport à l'axe A2. La surface extérieure cylindrique 62' suit donc de manière continue la seconde courbe directrice fermée 64' en forme de cercle, en étant définie par une génératrice parallèle à l'axe A2 qui suit cette même courbe 64'.

Dans une configuration non-contrainte en flambage du vérin 52, telle que représentée sur les figures 6 à 8 en vue axiale selon les axes A1 et A2, les première et seconde courbes directrices fermées 64, 64' sont de préférence concentriques et de mêmes formes, la première étant de dimension supérieure à la seconde de manière à définir un écartement constant 72 tout le long de celles-ci selon la direction 43'.

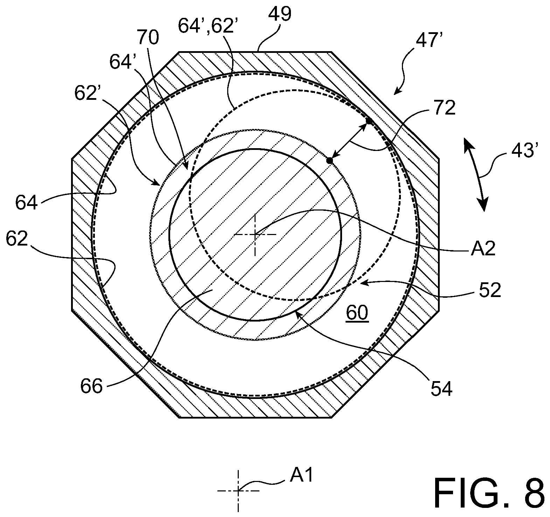

Avec une telle conception, en cas de sollicitation du vérin 52 conduisant à son flambage, ce phénomène reste maitrisé grâce à la possible coopération entre la bague 70 et la surface intérieure 62 du canal 60. En effet, la bague 70 équipant l'extrémité de sortie 66 de la partie fixe du vérin 52 sert de butée radiale potentielle sur la structure inter-grilles 47'. Ainsi, durant le déplacement du système mobile 29 de l'inverseur vers sa position avancée de poussée directe, l'amplitude d'un éventuel flambage du vérin 52 demeure maîtrisée en ne pouvant aller au-delà de la valeur de l'écartement initial 72 entre les deux courbes 64, 64'. Lorsque cet écartement 72 est consommé, la surface extérieure cylindrique 62' de la bague 70 entre au contact de la surface intérieure cylindrique 62 du canal 60, limitant ainsi le flambage du vérin à une amplitude maîtrisée et non préjudiciable. Une telle situation est schématisée en pointillés sur la figure 8.

La bague extérieure de limitation de flambage 70 peut être réalisée d'une seule pièce, c'est-à-dire monobloc, ou bien préférentiellement être fendue ou sectorisée pour faciliter son implantation et son remplacement autour du cylindre fixe de vérin. Dans le cas où cette bague 70 est sectorisée, il peut par exemple s'agir de deux demi-coquilles rapportées autour du cylindre de vérin.

Pour limiter les efforts de friction entre la structure inter-grilles 47' et la bague 70, lors d'un déplacement du système mobile 29 et en cas d'un flambage de vérin contenu par l'entrée au contact de ces éléments 47', 70, la bague est préférentiellement réalisée dans un matériau antifriction conventionnel, connu de l'homme du métier. Alternativement, seul un revêtement antifriction peut être prévu sur la bague 70 pour former la surface extérieure 64', sans sortir du cadre de l'invention. En cas d'usure, la bague 70 peut avantageusement être remplacée autour du cylindre de vérin.

Au cours du déplacement du système mobile 29 de l'inverseur vers sa position reculée d'inversion de poussée, la bague 70 se déplace axialement relativement au canal 60 en mouvement. Dans la position reculée d'inversion de poussée de la figure 7, l'extrémité de sortie 66 et la bague 70 qui l'entoure se trouvent logées dans le canal 60, à proximité d'une extrémité avant de la structure inter-grilles 47' mobile.

Tout le long d'un tronçon axial de la partie fixe 54 du vérin, qui se trouve à au moins un instant recouvert radialement par la structure inter-grilles 47' au cours de son déplacement accompagnant le changement de position du système mobile 29, c'est la bague 70 qui forme la partie la plus encombrante radialement de ce tronçon, c'est-à-dire la partie de plus grand diamètre. Cela permet à la bague 70 de constituer le point de contact privilégié du vérin 52 avec la structure inter-grilles 47', en cas de flambage du vérin.

La figure 6 montre une autre fonctionnalité de la structure arrière 45 de l'ensemble de grilles 32', qui consiste à réaliser la liaison axiale avec le capot d'inverseur 33, dans sa position fermée de vol. L'extrémité arrière de la structure 45 comprend un organe de liaison axial 76 en forme de gorge annulaire ouverte radialement vers l'extérieur, coopérant avec un organe de liaison axial complémentaire 78 prévu sur une extrémité avant du capot d'inverseur 33. Cet organe 78 prend de préférence la forme d'une saillie radiale vers l'intérieur, logée dans la gorge 76 pour l'obtention de l'accouplement axial en position fermée du capot 33. Lors de l'ouverture de ce dernier vers sa position ouverte de maintenance, la saillie 78 s'extrait de la gorge 76.

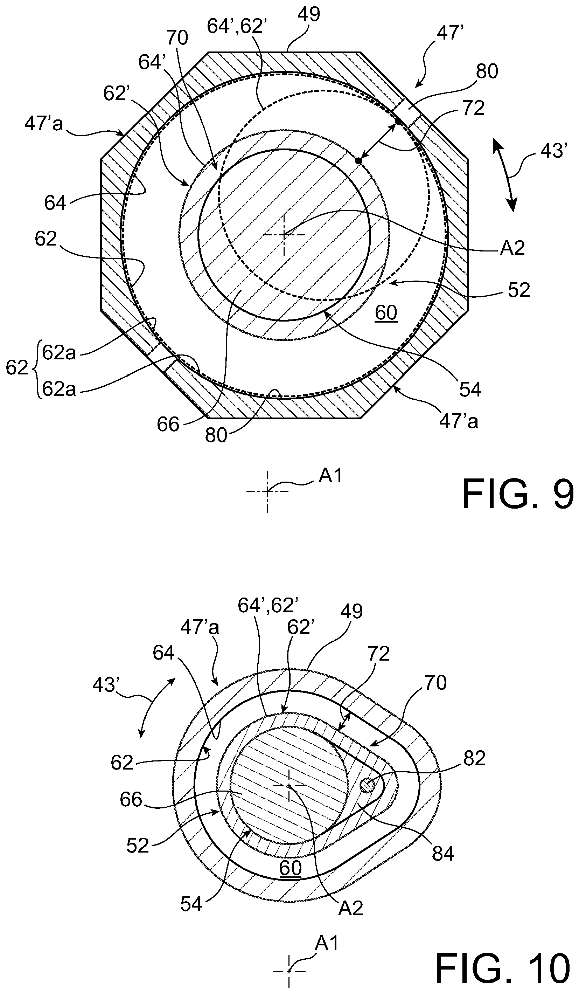

Selon un autre mode de réalisation montré sur la figure 9, les deux courbes 64, 64' restent de forme circulaire, mais la surface intérieure cylindrique 62 du canal n'est plus continue. Elle est interrompue circonférentiellement en s'étendant le long d'une partie seulement de la première courbe directrice fermée 64, de manière à définir plusieurs secteurs angulaires de surface intérieure cylindrique 62a. Ici, ce sont deux secteurs angulaires 62a, 62a qui sont espacés l'une de l'autre par deux interruptions de surface 80. Dans cette configuration, la structure inter-grilles de limitation de flambage 47' est préférentiellement réalisée à l'aide de deux poutres axiales 47'a, 47'a définissant respectivement les deux secteurs angulaires 62a, 62a. Chaque poutre s'étend sur toute la longueur de l'ensemble de grilles 32', en étant fixée à ses extrémités sur les structures de support avant et arrière sur lesquelles sont également fixées les extrémités avant et arrière des grilles 32.

Les interruptions de surface 80, correspondant à des portions vides entre les deux poutres 47'a de la structure inter-grilles 47', s'étendent de préférence sur une faible amplitude angulaire. Chaque secteur angulaire de surface intérieure cylindrique 62a peut, comme toute sa poutre associée 47'a, s'étendre sur une amplitude supérieure à 100°, et par exemple proche de 180° comme représenté sur la figure 9.

Il est noté qu'un principe similaire peut être adopté pour la surface extérieure cylindrique 62' de la bague 70, en prévoyant des interruptions de surface espaçant des secteurs angulaires de surface extérieure cylindrique.

Selon un autre mode de réalisation montré sur la figure 10, les deux courbes directrices fermées 64, 64' ne sont plus en forme de cercle, mais par exemple légèrement ovalisées d'un côté de manière à tenir compte de la forme générale de la partie fixe 54 du vérin, pourvue de ses équipements extérieurs comme une conduite de retour d'huile 82 et sa ferrure 84 de maintien au cylindre de vérin. Ainsi, la forme du canal 60 et de la bague 70 peut être adaptée en fonction de la forme générale extérieure de la partie fixe 54 du vérin 52, toujours en conservant un écartement radial 72 constant à l'état non-contraint en flambage.

Bien entendu, diverses modifications peuvent être apportées par l'homme du métier à l'invention qui vient d'être décrite, uniquement à titre d'exemples non limitatifs, et dont la portée est définie par les revendications annexées. En particulier, les différents modes de réalisation préférés qui ont été décrits sont combinables. De plus, l'inverseur de poussée 30 peut alternativement présenter une architecture en « C » ou en « O ».

## Revendications

1. Inverseur de poussée (30) pour ensemble propulsif d'aéronef, l'inverseur présentant un axe central longitudinal (A1) et comprenant une structure fixe (31) et un système mobile (29), le système mobile comprenant au moins un capot d'inverseur (33) et au moins un ensemble de grilles de déviation (32') comprenant une pluralité de grilles de déviation (32), l'inverseur comportant également un actionneur (52) équipé d'une partie fixe (54) et d'une partie (56) mobile par rapport à la partie fixe, de manière à pouvoir déplacer le système mobile (29) en translation par rapport à la structure fixe (31) de l'inverseur selon l'axe central longitudinal (A1), entre une position avancée de poussée directe et une position reculée d'inversion de poussée, l'actionneur (52) étant un vérin hydraulique ou électrique,
**caractérisé en ce que** le système mobile (29) comporte également une structure inter-grilles (47') de limitation de flambage de l'actionneur, la structure inter-grilles étant interposée entre deux grilles de déviation (32) directement consécutives et formant un canal (60) traversé par l'actionneur (52), le canal étant délimité par une surface intérieure cylindrique (62) s'étendant circonférentiellement le long d'au moins une partie d'une première courbe directrice fermée (64),
et **en ce que** la partie fixe (54) de l'actionneur (52) traverse le canal (60) et comprend une extrémité (66) de sortie de la partie mobile (56), cette extrémité de sortie (66) étant équipée d'une bague extérieure (70) de limitation de flambage de l'actionneur, la bague présentant une surface extérieure cylindrique (62') s'étendant circonférentiellement le long d'au moins une partie d'une seconde courbe directrice fermée (64').

2. Inverseur selon la revendication 1, **caractérisé en ce que** dans une configuration non-contrainte en flambage de l'actionneur (52), les première et seconde courbes directrices fermées (64, 64') sont, en vue selon l'axe central longitudinal (A1), de mêmes formes et concentriques en étant espacées l'une de l'autre d'un même écartement (72) tout le long de celles-ci.

3. Inverseur selon la revendication 1 ou 2, **caractérisé en ce que** ledit au moins un ensemble de grilles (32') comprend également une structure arrière (45) de support des grilles sur laquelle est fixée une extrémité arrière de la pluralité de grilles de déviation (32), ainsi qu'une structure avant (45') de support des grilles sur laquelle est fixée une extrémité avant de la pluralité de grilles de déviation (32), et **en ce que** la structure inter-grilles de limitation de flambage (47') comporte une extrémité avant et une extrémité arrière respectivement fixées sur la structure avant de support (45') et sur la structure arrière de support (45).

4. Inverseur selon l'une quelconque des revendications précédentes, **caractérisé en ce que** les première et seconde courbes directrices fermées (64, 64') présentent une forme circulaire.

5. Inverseur selon l'une quelconque des revendications 1 à 4, **caractérisé en ce que** la surface intérieure cylindrique (62) du canal (60) s'étend circonférentiellement tout le long de la première courbe directrice fermée (64), la structure inter-grilles de limitation de flambage (47') étant préférentiellement réalisée d'une seule pièce.

6. Inverseur selon l'une quelconque des revendications 1 à 4, **caractérisé en ce que** la surface intérieure cylindrique (62) du canal (60) est interrompue circonférentiellement en s'étendant le long d'une partie seulement de la première courbe directrice fermée (64), de manière à définir plusieurs secteurs angulaires de surface intérieure cylindrique (62a), de préférence deux secteurs angulaires (62a, 62a) espacés l'une de l'autre, la structure inter-grilles de limitation de flambage (47') étant préférentiellement réalisée à l'aide de deux poutres axiales (47'a, 47'a) définissant respectivement les deux secteurs angulaires (62a, 62a).

7. Inverseur selon l'une quelconque des revendications précédentes, **caractérisée en ce que** la structure inter-grilles de limitation de flambage (47') comporte une surface extérieure (49) formant une piste axiale de glissement pour le système mobile (29).

8. Inverseur selon l'une quelconque des revendications précédentes, **caractérisée en ce que** la bague extérieure de limitation de flambage (70) est réalisée d'une seule pièce, fendue, ou sectorisée.

9. Ensemble propulsif (1) pour aéronef, comprenant une turbomachine (2) et une nacelle (3) équipée d'un inverseur de poussée (30) selon l'une quelconque des revendications précédentes.

## Patentansprüche

1. Schubumkehrer (30) für eine Flugzeugantriebseinheit, wobei der Umkehrer eine Längsmittelachse (A1) aufweist und eine feste Struktur (31) und ein bewegliches System (29) umfasst, wobei das bewegliche System wenigstens eine Umkehrerabdeckung (33) und wenigstens eine Anordnung von Umlenkgittern (32') umfasst, die eine Vielzahl von Umlenkgittern (32) umfasst, wobei der Umkehrer ebenfalls einen Aktuator (52) aufweist, der mit einem festen Teil (54) und einem in Bezug auf den festen Teil beweglichen Teil (56) ausgestattet ist, so dass das bewegliche System (29) translatorisch in Bezug auf die feste Struktur (31) des Umkehrers gemäß der Längsmittelachse (A1) zwischen einer vorgeschobenen Position für direkten Schub und einer zurückgeschobenen Schubumkehrposition bewegbar ist, wobei der Aktuator (52) ein hydraulischer oder elektrischer Zylinder ist,
**dadurch gekennzeichnet, dass** das bewegliche System (29) ebenfalls eine Intergitterstruktur (47') zur Begrenzung der Knickung des Aktuators aufweist, wobei die Intergitterstruktur zwischen zwei direkt aufeinanderfolgenden Umlenkgittern (32) angeordnet ist und einen Kanal (60) bildet, der von dem Aktuator (52) durchquert wird, wobei der Kanal durch eine zylindrische Innenfläche (62) begrenzt ist, die sich umlaufend entlang wenigstens eines Teils einer ersten geschlossenen Leitkurve (64) erstreckt,
und dass der feste Teil (54) des Aktuators (52) den Kanal (60) durchquert und ein Ausgangsende (66) des beweglichen Teils (56) umfasst, wobei dieses Ausgangsende (66) mit einem äußeren Knickbegrenzungsring (70) des Aktuators ausgestattet ist, wobei der Ring eine zylindrische Außenfläche (62') aufweist, die sich umlaufend entlang wenigstens eines Teils einer zweiten geschlossenen Leitkurve (64') erstreckt.

2. Umkehrer nach Anspruch 1, **dadurch gekennzeichnet, dass** in einer knickunbeanspruchten Konfiguration des Aktuators (52) die erste und zweite geschlossene Leitkurve (64, 64') in der Ansicht gemäß der Längsmittelachse (A1) gleich geformt und konzentrisch sind, indem sie entlang dieser um denselben Abstand (72) voneinander beabstandet sind.

3. Umkehrer nach Anspruch 1 oder 2, **dadurch gekennzeichnet, dass** die wenigstens eine Gitteranordnung (32') ebenfalls eine hintere Gitterträgerstruktur (45) umfasst, an der ein hinteres Ende der Vielzahl von Umlenkgittern (32) befestigt ist, sowie eine vordere Gitterträgerstruktur (45'), an der ein vorderes Ende der Vielzahl von Umlenkgittern (32) befestigt ist, und dass die Knickbegrenzungs-Intergitterstruktur (47') ein vorderes Ende und ein hinteres Ende aufweist, die jeweils an der vorderen Stützstruktur (45') und an der hinteren Stützstruktur (45) befestigt sind.

4. Umkehrer nach einem der vorhergehenden Ansprüche, **dadurch gekennzeichnet, dass** die erste und zweite geschlossene Leitkurve (64, 64') eine kreisförmige Form aufweisen.

5. Umkehrer nach einem der Ansprüche 1 bis 4, **dadurch gekennzeichnet, dass** sich die zylindrische Innenfläche (62) des Kanals (60) umlaufend entlang der ersten geschlossenen Leitkurve (64) erstreckt, wobei die Knickbegrenzungs-Intergitterstruktur (47') vorzugsweise einteilig ausgeführt ist.

6. Umkehrer nach einem der Ansprüche 1 bis 4, **dadurch gekennzeichnet, dass** die zylindrische Innenfläche (62) des Kanals (60) umlaufend unterbrochen ist, indem sie sich nur entlang eines Teils der ersten geschlossenen Leitkurve (64) erstreckt, um mehrere Winkelsektoren der zylindrischen Innenfläche (62a), vorzugsweise zwei voneinander beabstandete Winkelsektoren (62a, 62a), zu definieren, wobei die Knickbegrenzungs-Intergitterstruktur (47') vorzugsweise mithilfe von zwei Axialträgern (47'a, 47'a) ausgeführt ist, die jeweils die beiden Winkelsektoren (62a, 62a) definieren.

7. Umkehrer nach einem der vorhergehenden Ansprüche, **dadurch gekennzeichnet, dass** die Knickbegrenzungs-Intergitterstruktur (47') eine Außenfläche (49) aufweist, die eine axiale Gleitbahn für das bewegliche System (29) bildet.

8. Umkehrer nach einem der vorhergehenden Ansprüche, **dadurch gekennzeichnet, dass** der äußere Knickbegrenzungsring (70) einteilig, geschlitzt oder sektorisiert ausgeführt ist.

9. Antriebseinheit (1) für Flugzeug, umfassend eine Turbomaschine (2) und eine Gondel (3), die mit einer Schubumkehr (30) nach einem der vorhergehenden Ansprüche ausgestattet ist.

## Claims

1. A thrust reverser (30) for an aircraft propulsion unit, the reverser having a longitudinal central axis (A1) and comprising a fixed structure (31) and a movable system (29), the movable system comprising at least one reverser cowl (33) and at least one set of cascade vanes (32') comprising a plurality of cascade vanes (32), the reverser also including an actuator (52) equipped with a fixed portion (54) and a portion (56) movable relative to the fixed portion, so as to be able to move the movable system (29) in translation relative to the fixed structure (31) of the reverser according to the longitudinal central axis (A1), between an advanced direct thrust position and a backward thrust reversal position, the actuator (52) being a hydraulic or electric actuator,
**characterised in that** the movable system (29) also includes an inter-cascade structure (47') for limiting buckling of the actuator, the inter-cascade structure being interposed between two directly consecutive cascade vanes (32) and forming a channel (60) crossed by the actuator (52), the channel being delimited by a cylindrical internal surface (62) extending circumferentially along at least one portion of a first closed directrix curve (64), and **in that** the fixed portion (54) of the actuator (52) passes through the channel (60) and comprises an outlet end (66) of the movable portion (56), this outlet end (66) being equipped with an external ring (70) for limiting buckling of the actuator, the ring having a cylindrical external surface (62') extending circumferentially along at least one portion of a second closed directrix curve (64').

2. The reverser according to claim 1, **characterised in that**, in a buckling unconstrained configuration of the actuator (52), the first and second closed directrix curves (64, 64') have, when viewed according to the longitudinal central axis (A1), the same shapes and are concentric by being spaced apart from one another by the same spacing (72) along these.

3. The reverser according to claim 1 or 2, **characterised in that** said at least one set of cascade vanes (32') also comprises a rear structure (45) for supporting the cascade vanes on which a rear end of the plurality of cascade vanes (32) is fastened, as well as a front structure (45') for supporting the cascade vanes on which a front end of the plurality of cascade vanes (32) is fastened, and **in that** the inter-cascade structure for limiting buckling (47') includes a front end and a rear end respectively fastened on the support front structure (45') and on the support rear structure (45).

4. The reverser according to any one of the preceding claims, **characterised in that** the first and second closed directrix curves (64, 64') have a circular shape.

5. The reverser according to any one of claims 1 to 4, **characterised in that** the cylindrical internal surface (62) of the channel (60) extends circumferentially all along the first closed directrix curve (64), the inter-cascade structure for limiting buckling (47') being preferably made in one-piece.

6. The reverser according to any one of claims 1 to 4, **characterised in that** the cylindrical internal surface (62) of the channel (60) is circumferentially interrupted by extending along only one portion of the first closed directrix curve (64), so as to define several cylindrical internal surface angular sectors (62a), preferably two angular sectors (62a, 62a) spaced apart from one another, the inter-cascade structure for limiting buckling (47') being preferably made using two axial beams (47'a, 47'a) respectively defining the two angular sectors (62a, 62a).

7. The reverser according to any one of the preceding claims, **characterised in that** the inter-cascade structure for limiting buckling (47') includes an external surface (49) forming an axial slide track for the movable system (29).

8. The reverser according to any one of the preceding claims, **characterised in that** the external ring for limiting buckling (70) is made in one-piece, split, or sectorised.

9. A propulsion unit (1) for an aircraft, comprising a turbomachine (2) and a nacelle (3) equipped with a thrust reverser (30) according to any one of the preceding claims.
